# EUROPÄISCHE PATENTSCHRIFT

(11) **EP 2 703 058 B1**
(45) Veröffentlichungstag und Bekanntmachung des Hinweises auf die Patenterteilung: **11.10.2017**
(21) Anmeldenummer: 12006100.7
(22) Anmeldetag: 28.08.2012
(51) Int. Cl.: B01D 45/00, B01D 1/30

(54) **BRENNSTOFFZELLENSYSTEM MIT EINEM AUFFANGBEHÄLTER FÜR FLÜSSIGKEITSABSCHEIDER SOWIE VERFAHREN ZUM BETRIEB DES FLÜSSIGKEITSABSCHEIDERS**
FUEL CELL SYSTEM WITH A COLLECTING VESSEL FOR A LIQUID SEPARATOR AND METHOD OF OPERATING THE VESSEL
PILE À COMBUSTIBLE AVEC RÉCIPIENT DE COLLECTE POUR UN SÉPARATEUR DE LIQUIDE AINSI QUE PROCÉDÉ DE FONCTIONNEMANT D'UN SÉPARATEUR DE LIQUIDE

(43) Veröffentlichungstag der Anmeldung: 05.03.2014
(73) Patentinhaber: Eberspächer catem GmbH & Co. KG, 76863 Herxheim (DE)
(72) Erfinder: Walz, Kurt, 76767 Hagenbach (DE); Niederer, Michael, 76889 Kapellen-Drusweiler (DE)
(74) Vertreter: Grünecker Patent- und Rechtsanwälte PartG mbB

(56) Entgegenhaltungen:
- EP-A1- 0 847 601
- DE-A1- 4 426 683
- DE-A1-102008 033 472
- US-A- 2 342 950
- US-A1- 2010 183 939
- US-A1- 2011 091 782

## Beschreibung

Die Erfindung betrifft einen Auffangbehälter für einen Flüssigkeitsabscheider nach dem Oberbegriff des Anspruchs 1.

Ein gattungsgemäßer Auffangbehälter ist zum Beispiel aus der EP 2 280 440 A1 bekannt. Der aus diesem Stand der Technik bekannte Auffangbehälter ist Teil eines in einem Brennstoffzellensystem integrierten Flüssigkeitsabscheiders. In dem Brennstoffzellensystem sind mehrere Stapeleinheiten von Membranelektrodeneinheiten hintereinandergeschaltet. Über eine gemeinsame Zuleitung wird ein Betriebsfluid über die hintereinandergeschalteten Stapeleinheiten geleitet. In die Zuleitung ist zwischen zwei Stapeleinheiten der Flüssigkeitsabscheider geschaltet. Der Flüssigkeitsabscheider stellt einen Feuchtigkeitsgehalt des Betriebsfluids nach Durchgang durch eine dem Flüssigkeitsabscheider vorgelagerte Stapeleinheit ein, dass ein effizienter Betrieb einer dem Flüssigkeitsabscheider nachgelagerten Stapeleinheit gewährleistet ist. Nach Durchgang durch die Stapeleinheit ist der Flüssigkeitsgehalt des Betriebsfluids üblicherweise erhöht. Demnach wird in dem Flüssigkeitsabscheider ein Teil der in dem Betriebsfluid enthaltenen Flüssigkeit abgeschieden und in einer Kammer des Flüssigkeitsabscheiders gesammelt. Von Zeit zu Zeit wird die abgeschiedene Flüssigkeit über ein Ventil aus der Kammer abgelassen, welches ansonsten ein Entweichen des Betriebsfluids verhindert. Das Betriebsfluid wird von der Zuleitung über einen Einlass in die Kammer hinein und über einen Auslass aus der Kammer herausgeleitet.

Aus der WO 2012/034636 A1 ist beispielsweise ein Brennstoffzellensystem bekannt, welches kathodenseitig und anodenseitig je einen Flüssigkeitsabscheider mit einem Auffangbehälter aufweist. Anodenseitig wird gemäß der WO 2012/034636 A1 Wasserstoffgas als erstes Betriebsfluid im Kreislauf geführt. Bei dieser Kreislaufführung sammelt sich zum Beispiel ein Teil des in der Brennstoffzelle entstehenden Produktwassers im Bereich des Anodenraums und wird über das Anodenabgas mit ausgetragen. Um einen effizienten Betrieb der Brennstoffzelle zu gewährleisten, ist der eine Flüssigkeitsabscheider in den Anodenkreislauf geschaltet. So wird der Wassergehalt des im Kreislauf geführten Wasserstoffgases reduziert. Aus dem einen Flüssigkeitsabscheider wird das im Anodenkreislauf gesammelte Wasser von Zeit zu Zeit oder auch kontinuierlich einer Kathodenraumzuleitung zugeführt. In der Kathodenraumzuleitung wird als zweites Betriebsfluid gemäß der WO 2012/034636 A1 Luft aus der Umgebung zu der Kathode der Membranelektrodeneinheit geführt. Die Zuführung des abgelassenen Wassers in die Kathodenraumzuleitung hat den Vorteil, dass einerseits der Feuchtigkeitsgehalt der der Kathode zugeleiteten Luft eingestellt werden kann und andererseits gleichzeitig der mit dem abgelassenen Wasser entweichende Wasserstoff mit dem zugeleiteten, in der Luft enthaltenen Sauerstoff an der Kathode abreagieren kann und folglich nicht in die Umgebung abgegeben werden muss. Da das aus dem Anodenkreislauf abgeschiedene Wasser und in die Kathodenraumzuleitung eingeleitete Wasser üblicherweise einen zu hohen Wassergehalt der Luft einstellt, ist der andere der beiden Feuchtigkeitsabscheider in die Kathodenraumzuleitung geschaltet. In diesem wird der Feuchtigkeitsgehalt der mittels des Wassers aus dem Anodenkreislauf befeuchteten Luft reduziert, sodass ein effektiver Betrieb der Brennstoffzelle gewährleistet ist.

Für einen geringen ionischen Widerstand einer in der Membranelektrodeneinheit zwischen Anode und Kathode vorgesehenen Membran ist eine bestimmte Feuchtigkeit für eine effektive Ionenleitung, insbesondere Protonenleitung von Bedeutung. Deshalb dürfen die in einem Anodenraum bzw. einem Kathodenraum der Membranelektrodeneinheit zugeleiteten Betriebsfluide nicht zu trocken sein, weil diese hierdurch die Membran austrocknen. Ebenso dürfen die Betriebsfluide aber auch keine zu hohe Feuchtigkeit aufweisen, weil in dem Anodenraum bzw. Kathodenraum, insbesondere auf der Anode und Kathode abgeschiedene Feuchtigkeit einen effektiven Strom des Betriebsfluids des Brennstoffzellensystems verhindert.

Weitere Brennstoffzellensysteme mit Flüssigkeitsabscheidern, die einen Auffangbehälter enthalten, sind aus der DE 10 2008 033 472 A1, der EP 0 847 601 B1 sowie DE 10 2008 006 736 A1 bekannt. Ferner offenbart US2010/0183939A1 ein Brennstoffzellensystem mit einem Flüssigkeitsabscheider mit einer Heizung. Diese vorgenannten im Stand der Technik bekannten Brennstoffzellensysteme sind für den Einsatz in Kraftfahrzeugen konzipiert. Problematisch bei solchen Brennstoffzellensystemen in einem Kraftfahrzeug ist ein effizienter Winterbetrieb. Gerade nach einem Kaltstart, z. B. bei Temperaturen unter 0°C kann in dem Kraftfahrzeug üblicherweise noch keine derartige Wärmemenge zur Verfügung gestellt werden, dass in den Auffangbehältern gefrorene Flüssigkeit geschmolzen wird. Ein effizienter Betrieb des Brennstoffzellensystems ist demnach gerade in der Kaltstartphase nicht möglich, weil das Ablassen von Flüssigkeit oder Gas über den Flüssigkeitsabscheider mit der in diesem gefrorenen Flüssigkeit nicht möglich ist.

Erst wenn die Flüssigkeit in dem Auffangbehälter aufgeschmolzen ist, kann der Betrieb des Brennstoffzellensystems einwandfrei und effizient funktionieren.

Diese im Winter auftretende Problematik ist nicht einzig auf Flüssigkeitsabscheider in Brennstoffzellensystemen beschränkt, sondern tritt ebenso bei allen Arten bekannter Flüssigkeitsabscheider auf, in denen es vorkommt, dass in diesen aufgefangene Flüssigkeit unter irgendeiner Einwirkung von einem flüssigen in den festen Zustand übergeht.

Folglich ist es Aufgabe der Erfindung, einen verbesserten Auffangbehälter anzugeben zur Verwendung in einem Brennstoffzellensystem, welcher insbesondere einen effizienteren Betrieb eines Brennstoffzellensystems in einem Kraftfahrzeug ermöglicht.

Das der Erfindung zugrunde liegende Problem wird mit den Merkmalen von Anspruch 1 gelöst. Der Auffangbehälter unterscheidet sich von dem bereits aus der EP 2 280 440 A1 bekannten Auffangbehälter dadurch, dass die Abscheidekammer in zwei Teilkammern geteilt ist, welche über einen Überlauf miteinander kommunizieren. Des Weiteren ist einer der beiden Teilkammern ein Ablauf sowie eine Heizeinrichtung zugeordnet.

Als Auffangbehälter im Sinne der vorliegenden Erfindung ist dabei insbesondere ein solcher Behälter zu verstehen, der für sich eine abgeschlossene Einheit bildet, in dem zumindest zwei, üblicherweise genau zwei Teilkammern angeordnet sind. Mit Blick auf eine kompakte Ausgestaltung ist es dabei zu bevorzugen, dass der Überlauf als Ausnehmung in einer Trennwand ausgespart ist, die beide Teilkammern begrenzt. Vorteilhafterweise sind die beiden Teilkammern in einem gemeinsamen Gehäuse in Querrichtung zu diesem nebeneinander angeordnet. Innerhalb des Gehäuses ist hierbei zum Beispiel die Trennwand ausgebildet, welche eine innerhalb des Gehäuses gebildete Kammer in die erste sowie zweite Teilkammer unterteilt. Die Trennwand durchragt hierbei zum Beispiel in Höhenrichtung die innerhalb des Gehäuses gebildete Kammer derart, dass der Überlauf von einem zwischen einer Oberseite des Gehäuses und einem Ende der Trennwand, welches diese zu der Oberseite des Gehäuses begrenzt, gebildeten Zwischenraum ausgebildet wird. Zumindest eine der Teilkammern wird vorzugsweise durch Wandungen begrenzt, die durch das Gehäuse gebildet sind. Besonders vorteilhaft bildet der Auffangbehälter eine bauliche Einheit mit dem Flüssigkeitsabscheider aus. Weiterhin ist es zu bevorzugen, lediglich eine einzige Heizeinrichtung vorzusehen, die der ersten Teilkammer zugeordnet ist, wobei die erste Teilkammer und die Heizeinrichtung bevorzugt eine gemeinsame Trennwand haben, sodass das in der ersten Teilkammer enthaltene abgeschiedene Volumen unmittelbar die Heizeinrichtung kontaktiert. Ganz besonders vorteilhaft hat die zweite Teilkammer jedoch keine gemeinsame Trennwand mit der Heizeinrichtung. Folglich beheizt die Heizeinrichtung unmittelbar allein die erste Teilkammer. Besonders vorteilhaft ist es, wenn die Heizeinrichtung in eine an dem Gehäuse ausgebildete Tasche eingesetzt ist. Innerhalb der Tasche ist die Heizeinrichtung zum Beispiel derart fest gegen Innenwandabschnitte der Tasche verspannt, dass eine besonders gute Wärmeübertragung von der Heizeinrichtung über die Innenwandabschnitte der Tasche und das Gehäuse auf das in der ersten Teilkammer enthaltene abgeschiedene Volumen gewährleistet ist. Die Heizeinrichtung kann jede beliebige zweckmäßige Ausgestaltung haben und kann beispielweise als elektrische Widerstandsheizung vorgesehen sein. Zwar muss die Heizeinrichtung kein eigenes Heizgehäuse enthalten und kann beispielsweise als Tauchsieder ausgeführt sein mit unmittelbar in die erste Teilkammer hineinragenden elektrischen Widerstandsdrähten. Bevorzugt ist indes eine Heizeinrichtung, die als PTC-Heizeinrichtung verwirklicht ist und zumindest ein PTC-Element enthält, welches unter Anlage einer Spannung Wärme generiert. Dabei liegt das PTC-Element üblicherweise an gegenüberliegenden Seiten an Kontaktblechen an, die der Bestromung des PTC-Elementes dienen und üblicherweise durch Stanzbearbeitung Anschlussfahnen ausbilden, die steckkontaktierbar sind. Die Heizeinrichtung des Auffangbehälters hat üblicherweise an der Außenseite der Kontaktbleche vorgesehene Isolierlagen, die in wärmeleitender Verbindung einerseits mit den besagten Kontaktblechen stehen und andererseits an dem äußeren Heizgehäuse anliegen, welches auch Trennwand der ersten Teilkammer sein kann. Das Gehäuse der Heizkammer kann dabei auch durch das Gehäuse des Auffangbehälters selbst gebildet sein. Denkbar ist eine Ausgestaltung, bei welcher das PTC-Element zur guten elektrischen Kontaktierung mit den Kontaktblechen einerseits und guten wärmemäßigen Kontaktierung zu dem äußeren Gehäuse bzw. Heizergehäuse durch wenigstens ein Keilelement andererseits verklemmt ist, wie dies aus der EP 1 921 896 A1 beschrieben ist.

Ein solches Heizelement weist ein Heizergehäuse auf und ist dementsprechend als bauliche Einheit, aber separat von den Gehäuse des Auffangbehälters handhabbar. Das Heizgehäuse wird zum Beispiel in die an dem Gehäuse des Auffangbehälters ausgebildete Tasche eingesetzt und in dieser verspannt. Das Heizgehäuse ist besonders bevorzugt keilförmig ausgebildet und wirkt dementsprechend mit ebenso keilförmig ausgebildeten Innenwandabschnitten der Tasche zusammen. Der Offenbarungsgehalt der EP 1 921 896 A1 wird in Bezug auf die Heizeinrichtung sowie in Bezug auf mögliche an dem Gehäuse des Auffangbehälters ausgebildete Taschen durch diesen Verweis in die Offenbarung dieser Anmeldung aufgenommen.

Der Auffangbehälter bietet den Vorteil, dass nicht erst die gesamte in der Abscheidekammer abgeschiedene und gesammelte Flüssigkeit geschmolzen werden muss, bis zum ersten Mal wieder Flüssigkeit abgelassen werden kann. Es reicht hierbei vielmehr aus, nur die Flüssigkeit in der ersten Teilkammer zu schmelzen, bis diese das erste Mal abgelassen werden kann. So kann der Auffangbehälter relativ schnell, insbesondere nach einem Kaltstart im Winterbetrieb eines Kraftfahrzeugs, wieder Flüssigkeit aufnehmen, ohne dass zuerst die komplette Flüssigkeit in dem Auffangbehälter aufgetaut werden muss.

Das Volumen der Kammer kann dabei gleichwohl durch angemessene Dimensionierung der zweiten Teilkammer ausreichend groß sein, um beispielsweise in einem gasdichten Betrieb nur in verhältnismäßig großen Intervallen durch Öffnen eines Ventils, welches dem Ablauf zugeordnet ist, abgeschiedene Flüssigkeit abzuleiten.

Gemäß einer bevorzugten Weiterbildung der Erfindung ist die erste Teilkammer kleiner als die zweite Teilkammer. Dabei ist das Kammervolumen der ersten Teilkammer vorzugsweise erheblich kleiner als das Volumen der zweiten Teilkammer gewählt. Das Volumen der ersten Teilkammer beträgt vorzugsweise nicht mehr als 50 %, bevorzugt nicht mehr als 40 % und besonders bevorzugt nicht mehr als 30 % der zweiten Teilkammer. Durch die oben erwähnte Maßnahme kann die Heizleistung zum Aufschmelzen der in der ersten Teilkammer enthaltenen und erstarrten, insbesondere eingefrorenen Flüssigkeit relativ gering gehalten werden. Demnach kann relativ schnell nach z. B. einem Kaltstart der Ablauf betätigt werden, ohne dass die Gefahr besteht, dass noch Reste von gefrorener Flüssigkeit diesen zusetzen. So kann in der Kaltstartphase sehr schnell ein effizienter Betrieb gewährleistet werden. Besonders bevorzugt ist es, den Auffangbehälter derart in dem Kraftfahrzeug zu integrieren, dass in einem normalen Betrieb entstehende Prozesswärme die in der zweiten Teilkammer gefrorene Flüssigkeit auftaut und hierfür nicht die zusätzliche Energie konsumierende Heizeinrichtung verwendet werden muss. Mit normalem Betrieb soll derjenige Betriebszustand bezeichnet werden, der sich üblicherweise nach der Kaltstartphase einstellt und bei dem die zunächst erstarrte und in der ersten Teilkammer enthaltene Flüssigkeit so weit aufgeschmolzen ist, dass das Volumen der ersten Teilkammer ganz oder teilweise abgelassen werden kann. So kann beispielsweise der Auffangbehälter in der Nähe von Wärme abgebenden Bauteilen angeordnet sein, beispielsweise einer Verlustleistung abgebenden Leistungssteuerung. Auch kann der Auffangbehälter so in die Brennstoffzelle integriert sein, dass der Strom des warmen Betriebsfluids auf der "Abgasseite" ganz oder teilweise um das Gehäuse des Auffangbehälters und/oder lediglich eine der beiden Teilkammern herumgeführt wird.

Dadurch, dass die Flüssigkeit in der Kaltstartphase von der Oberfläche der erstarrten Flüssigkeit in der zweiten Teilkammer über den Überlauf unmittelbar in die erste Teilkammer gelangt, ergibt sich an der Phasengrenze unter winterlichen Wetterbedingungen ein Aufschmelzen der in der ersten Teilkammer enthaltenen abgeschiedenen Flüssigkeit. Da der Überlauf ein Abfließen von überschüssiger gesammelter Flüssigkeit von der ersten Teilkammer in die zweite Teilkammer erlaubt, wird gleichzeitig ein kontinuierliches Ableiten von Flüssigkeit gewährleistet. Die zweite Teilkammer und/oder die erste Teilkammer kann neben dem üblichen Ablauf der ersten Teilkammer noch einen Not-Ablauf bzw. einen weiteren Ablauf aufweisen. Dieser ist zum Beispiel auf Höhe oder gar oberhalb eines Durchlasses des Überlaufs vorgesehen, sodass in jedem Fall ein Abführen von Flüssigkeit aus einer der Teilkammern möglich ist und ein Überlaufen des Auffangbehälters insgesamt nicht zu einem Betriebsstillstand des Brennstoffzellenfahrzeuges führen kann. Alternativ kann der Not-Ablauf bzw. der weitere Ablauf in Höhenrichtung des Auffangbehälters, insbesondere in der zweiten Teilkammer, auch zwischen dem Überlauf und einem unteren Ende der zweiten Teilkammer angeordnet sein. Diejenige Höhe, in welcher der Notablauf bzw. der weitere Ablauf zwischen dem Überlauf und dem unteren Ende der zweiten Teilkammer angeordnet ist, kann den Anforderungen entsprechend gewählt werden. Hierdurch kann insbesondere die Menge der im normalen Betriebszustand in der zweiten Teilkammer abgeschiedenen Flüssigkeit derart gesteuert werden, dass diese nicht komplett leerläuft. Mit anderen Worten: Bei geöffnetem Notablauf bzw. weiterem Ablauf bleibt immer noch eine Restmenge abgeschiedener Flüssigkeit in der zweiten Teilkammer, und zwar in einem Volumen im Bereich vom Boden der zweiten Teilkammer bis zur Höhe, in welcher der Ablauf vorgesehen ist. Bevorzugt wird demnach nur die in der ersten Teilkammer erstarrte Flüssigkeit durch die Heizeinrichtung verflüssigt und über dem Ablauf abgelassen. Die in der zweiten Teilkammer abgeschiedene erstarrte Flüssigkeit wird zeitverzögert über eine innerhalb der die beiden Teilkammern begrenzenden Trennwand vorgesehene Vorwärmleitung, durch welche ein warmes Medium geleitet wird, verflüssigt. Nach Verflüssigung der in der zweiten Teilkammer abgeschiedenen Flüssigkeit wird diese bevorzugt auch über den Überlauf in die erste Teilkammer abfließen und von dort über den Ablauf abgelassen. Es kann hierzu jedoch auch der Notablauf bzw. der weitere Ablauf betätigt werden, um ein Aufnahmevolumen für in dem Flüssigkeitsabscheider abgeschiedene Flüssigkeit in der zweiten Teilkammer zu schaffen. Dieses wird zwischen einer Oberkante des Notablaufs bzw. des weiteren Ablauf und dem Überlauf geschaffen.

Gemäß einer bevorzugten Weiterbildung ist es zweckmäßig, innerhalb der die beiden Teilkammern begrenzenden Trennwand die Vorwärmleitung auszubilden. Durch diese Vorwärmleitung können Betriebsmittel geleitet werden, welche bei Betrieb zum Beispiel eines Verbrennungsmotors, eines Brennstoffzellensystems oder sonstiger Aggregate in einem Kraftfahrzeug mit der in dem vorgenannten Systemen freigesetzten Prozesswärme beaufschlagt werden. In dem vorbezeichneten normalen Betrieb wird die in den beiden Teilkammern abgeschiedene Flüssigkeit durch das mit der Prozesswärme beaufschlagte, in der Vorwärmleitung fließende Betriebsmittel derart temperiert, dass der Betrieb der Heizeinrichtung im normalen Betrieb nicht weiter benötigt wird. Zur Zu- bzw. Ableitung des Betriebsmittel weist die Vorwärmleitung vorzugsweise Vorwärmleitungsein- und -auslässe auf, welche als Öffnungen in dem Gehäuse ausgebildet sind. Über den Vorwärmleitungseinlass wird üblicherweise das Betriebsmittel in die Vorwärmleitung innerhalb der vorzugsweise planaren Trennwand geführt und nachdem es beispielsweise in einer Schleife innerhalb der Trennwand geführt ist, aus dem Vorwärmleitungsauslass ausgelassen.

Gemäß einer bevorzugten Weiterbildung ist es zweckmäßig, die erste Teilkammer innerhalb der zweiten Teilkammer anzuordnen. "Innerhalb" meint hier insbesondere, dass die zweite Teilkammer die erste Teilkammer in zumindest einer Umfassungsrichtung vollumfänglich umgibt. So bildet zum Beispiel die zweite Teilkammer um die erste Teilkammer einen Ringraum aus. Auf einer Unterseite des Ringraums kann zum Beispiel die erste Teilkammer noch aus der zweiten Teilkammer herausragen.

Insbesondere hat die Erfindung zwei Teilkammern im Sinn, deren Bodenfläche höhengleich oder nur über eine Stufe höhenversetzt angeordnet sind. Auch bei der innerhalb der zweiten Teilkammer angeordneten ersten Teilkammer wird letztere vorzugsweise von einer Gehäusewandung des Auffangbehältergehäuses begrenzt. Bei dieser bevorzugten Ausgestaltung befindet sich der Überlauf in der Trennwand, die die erste Teilkammer von der zweiten Teilkammer trennt und ist dort als Aussparung vorgesehen. Es versteht sich von selbst, dass mehrere Aussparungen den Überlauf bilden können. Der Auffangbehälter kann dementsprechend kompakt gebaut werden und der Überlauf kann ebenso entsprechend einfach gehalten werden, ohne dass z. B. eine lange Leitung von der ersten Teilkammer in die zweite Teilkammer ausgebildet sein muss.

Gemäß einer weiteren bevorzugten Weiterbildung der Erfindung sind die Teilkammern im Wesentlichen koaxial zueinander angeordnet. Dabei befindet sich die erste Teilkammer regelmäßig innerhalb der zweiten Teilkammer, wobei die Heizeinrichtung üblicherweise im Zentrum der Anordnung oder radial leicht aus dem Zentrum versetzt vorgesehen ist. Insbesondere werden hier die Wandungen des Heizgehäuses in zumindest einer Umfangsrichtung von der ersten Teilkammer vollumfänglich umgeben. Von der Heizeinrichtung erzeugte Wärme führt dementsprechend zunächst zu einem Aufwärmen des Volumens der ersten Teilkammer. Danach setzt sich die Wärme in radialer Richtung nach außen fort. Die im Wesentlichen koaxiale Anordnung der beiden Teilkammern relativ zueinander hat den Vorteil, dass das Gehäuse des Auffangbehälters sehr kompakt gebaut und ausgebildet sein kann. Des Weiteren ergibt sich bei dem radialen Wärmefluss ein gleichmäßiges Aufschmelzen der in der ersten Teilkammer enthaltenen Flüssigkeit.

Gemäß einer bevorzugten Weiterbildung der Erfindung ist die erste Teilkammer von einer wärmeleitenden, mit der Heizeinrichtung gekoppelten Wandung begrenzt. Hierbei lässt sich die Erfindung von der Vorstellung leiten, dass die Heizeinrichtung, insbesondere die PTC-Heizeinrichtung das Heizgehäuse enthält, welches die Heizeinrichtung begrenzt. Das Heizgehäuse kann auch integral an dem Gehäuse des Auffangbehälters ausgebildet sein. Das Heizgehäuse ist dementsprechend bevorzugt aus einem relativ gut wärmeleitenden Material hergestellt und ragt in die erste Teilkammer hinein. Als gut wärmeleitendes Material ist zumindest jedes metallische Material anzusehen. Auch Kunststoff ist ein gut wärmeleitendes Material. Dabei muss das Heizgehäuse nicht ausschließlich von einem Blechelement umgeben sein. Vielmehr ist es auch möglich, dass Heizgehäuse in der Hauptwärmeleitrichtung aus Blechplatten auszuformen, die in der anderen Richtung von Kunststoffelementen gehalten sind. Sofern das Heizgehäuse die erste Teilkammer begrenzt, versteht es sich von selbst, dass dieses fluiddicht ausgebildet sein sollte.

Mit Blick auf eine einfache Herstellung sollten zwei schalenförmige Blechelemente die PTC-Anordnung der Heizeinrichtung (PTC-Element, Kontaktbleche und Isolierschichten) einschließen und durch einen elastischen Kleber, der Wärmespannungen kompensiert, dichtend miteinander verbunden sein. Als solcher Kleber kommt beispielsweise Silikon in Betracht. Die zuvor diskutierte Weiterbildung führt zu einem direkten wärmeleitenden Kontakt der gefrorenen Flüssigkeit mit der Heizeinrichtung über die gekoppelte Wandung. Um Leckageströme von der üblicherweise elektrisch betriebenen Heizeinrichtung in das Gehäuse des Auffangbehälters zu vermeiden, ist die wärmeleitende Wandung alternativ bevorzugt elektrisch isolierend, z. B. aus einem Kunststoff, ausgebildet. Auch das Kunststoffgehäuse kann aus schalenförmigen Elementen gebildet sein, welche flüssigkeitsdicht miteinander verbunden, insbesondere verklebt sind.

Gemäß einer bevorzugten Weiterbildung ist dem Ablauf ein Ventil zugeordnet, welches den Ablauf in einer ersten Stellung verschließt und in einer zweiten Stellung öffnet. Durch Ansteuerung des Ventils mittels einer Ventilsteuereinrichtung wird der Ablauf zu einem vorgegebenen Zeitpunkt geöffnet bzw. geschlossen. Die jeweiligen Öffnungs- und Schließzeitpunkte werden insbesondere aus Betriebsdaten, zum Beispiel eines Brennstoffzellensystems, in welches der Auffangbehälter integriert ist, berechnet.

Auch das Ventil ist - wie ebenso die Heizeinrichtung - in eine weitere an dem Gehäuse des Auffangbehälters ausgebildete Tasche eingesetzt. Das Ventil selbst ist vorzugsweise eine separat in dem Gehäuse ausgeführte bauliche Einheit, welche in die Ventiltasche eingesetzt ist. An einer Frontseite des Ventilgehäuses können beispielsweise Öffnungen vorgesehen sein, welche in den Ablauf geschaltet sind. Der Ablauf bildet dementsprechend eine erste Ablaufleitung, welche an eine erste Ventilöffnung angeschlossen ist, und eine zweite Ablaufleitung, welche an eine zweite Ventilöffnung angeschlossen ist. Bei geschlossener Ventilstellung sind die erste und zweite Ablaufleitung derart voneinander getrennt, dass in der ersten Teilkammer aufgenommene Flüssigkeit nicht ablaufen kann. Bei geöffneter Ventilstellung sind die erste Ablaufleitung mit der zweiten Ablaufleitung innerhalb des Ventilgehäuses derart miteinander verbunden, dass die Flüssigkeit über eine insbesondere an einer Unterseite des Gehäuses vorgesehene Ablauföffnung ablaufen kann.

Gemäß der bevorzugten Weiterbildung ist sowohl die Tasche, in welche die Heizeinrichtung eingesetzt ist, als auch die Ventiltasche an der selben Seite des Gehäuses vorgesehen. Die beiden Taschen können beispielsweise an einer Gehäuseunterseite ausgebildet sein, wobei sich dann die beiden Taschen in deren Längserstreckung in Höhenrichtung des Gehäuses erstrecken. Alternativ und besonders bevorzugt können die beiden Taschen auch in Querrichtung des Gehäuses an einer Seitenwand desselben ausgebildet sein, wobei sich dann die beiden Taschen in Querrichtung des Gehäuses, üblicherweise also senkrecht zu der Höhenrichtung, erstrecken. Besonders vorteilhaft ist es, wenn beide parallel zueinander ausgerichtet sind.

Mit einer parallelen Ausrichtung der Tasche meint die vorliegende Erfindung insbesondere eine Ausrichtung, bei der Mittelachsen der beiden Taschen parallel zueinander ausgerichtet sind. Ohne weiteres können einzelne Innenwandabschnitte der jeweiligen Tasche schräg verlaufen und nicht parallel zueinander ausgebildet sein. Dies ist insbesondere der Fall, wenn das Heizgehäuse der Heizeinrichtung ein Keilelement enthält, welches an schräg verlaufenden Innenwandabschnitten der Tasche, in welche das Heizgehäuse eingesetzt ist, anliegt. Vorteilhafterweise ist die Tasche, in welcher das Ventil eingesetzt ist, senkrecht zu der Höhenrichtung des Gehäuses und senkrecht zu einer Verbindungslinie zwischen einer den Ablauf zu der ersten Teilkammer begrenzenden Öffnung und der Auslassöffnung, welche außen an dem Gehäuse vorgesehen ist, ausgerichtet.

In dem Fall, dass die beiden Taschen in Querrichtung des Gehäuses ausgerichtet sind, sind die beiden das Gehäuse bildenden Teilkammern des Auffangbehälters vorzugsweise in einem Spritzgussverfahren hergestellt, wobei neben zwei Werkzeughälften, zwischen welchen das Gehäuse mit den beiden Teilkammern durch Einspritzen einer Spritzgussmasse ausgebildet wird, zumindest ein weiteres bewegliches Formsegment, welches zwei die Taschen ausbildende Kerne enthält, verwendet wird. Die beiden Werkzeughälften werden hierbei in einem ersten Schritt derart aufeinander zugefahren, dass diese eine Kavität bilden, in welcher das Gehäuse durch Füllen der Kavität beispielsweise mit Kunststoff, gebildet wird. In diese Kavität wird seitlich das bewegliche Formsegment gebracht, welches die Kavität derart begrenzt, dass durch die an dem Formsegment ausgebildeten Kerne die beiden Taschen ausgebildet werden. Bevorzugt sind die Werkzeughälften so ausgeformt, dass der Ablauf, der Not-Ablauf bzw. der weitere Ablauf der zweiten Teilkammer in Endkontur durch Urformen ausgebildet sind. Vorzugsweise ist ein Kuppelabschnitt vorgesehen, welcher einteilig mit dem Gehäuse ausgeformt ist. Dieser Kuppelabschnitt hat üblicherweise eine die erste Teilkammer ganz oder zumindest teilweise abdeckende Kuppel und formt einen aufragenden Wandabschnitt aus, der die beiden Teilkammern voneinander trennt und den Überlauf ausbildet. Dabei befindet sich die erste Teilkammer üblicherweise mittig oder zumindest im Wesentlichen mittig in der zweiten Teilkammer, sodass der aufragende Wandabschnitt eine Außenwandung der ersten Teilkammer ausformt. Durch den Überlauf kann Fluid von der zweiten Teilkammer in die erste Teilkammer gelangen. Der Kuppelabschnitt sollte ferner einen Fußbereich haben, der sich zwischen dem aufragenden Wandabschnitt und einer durch das Gehäuse außen ausgeformten Wandung erstreckt und dementsprechend einen Bodenabschnitt der zweiten Teilkammer ausformt. Ein derartiger, einteilig an dem Gehäuse ausgeformter Kuppelabschnitt erlaubt eine kostengünstige Ausformung des Gehäuses mit den beiden Teilkammern, wobei die Kuppel des Kuppelabschnittes sicherstellt, dass die aus dem Betriebsfluid abgeschiedene Flüssigkeit zumindest nahezu ausschließlich zunächst in die nicht mit der Kuppel abgedeckte zweite Teilkammer tropft und von dort über den Überlauf zu der ersten Teilkammer gelangt.

Gemäß einer bevorzugten Weiterbildung sind die aufragenden Wandabschnitte konisch ausgebildet. Diese Weiterbildung ermöglicht ein einfaches Entformen des vorzugsweise in einem Spritzgussverfahren hergestellten Gehäuses. So ist beispielsweise der Auffangbehälter aus einem zylindrischen Gehäuse gebildet, innerhalb dessen beide Teilkammern getrennt voneinander über den integral an dem Gehäuse ausgebildeten Kuppelabschnitt vorgesehen sind. In diesem konischen aufragenden Wandabschnitt dieses Kuppelabschnitts sind vorzugsweise Langlöcher, die konzentrisch um eine Mittelachse des Kuppelabschnittes und in Längsrichtung des zylindrischen Gehäuses ausgeführt sind, vorgesehen, die durch feste Kerne eines Spritzgießwerkzeuges, die in der Teilungsebene liegen, ausgeformt werden können.

Gemäß einer bevorzugten Weiterbildung wird die erste Teilkammer unterseitig von einem Bodenelement begrenzt. Das Bodenelement enthält üblicherweise den Ablauf und die Heizeinrichtung. Insbesondere ist das Bodenelement als Kappe vorgesehen, die den Kuppelabschnitt unterseitig begrenzt. Die zweite Teilkammer, welcher vorzugsweise der Einlass zugeordnet ist, wird z. B. durch die Gehäuseaußenwand und die Oberseite des Kuppelabschnittes begrenzt, wohingegen die erste Teilkammer, in der der Ablauf und das Heizelement vorgesehen sind, vorzugsweise von der Unterseite des Kuppelabschnittes und dem Bodensegment begrenzt werden. Das Bodensegment kann z. B. mit einer elastomeren Dichtung versehen sein, welche einen flüssigkeitsdichten Abschluss der ersten Teilkammer ermöglicht.

Gemäß einer bevorzugten Weiterbildung der Erfindung weist der Ablauf ein Feststoffrückhaltemittel auf. Das Feststoffrückhaltemittel ist bevorzugt als ein in die erste Teilkammer hineinragendes Rohrsegment eines Ablaufrohres ausgebildet, welches verhindert, dass während des Betriebs, insbesondere des Brennstoffzellensystems, entstandene Feststoffpartikel den Ablauf zusetzen können. Die Feststoffpartikel setzen sich bevorzugt auf dem Bodenelement der ersten Teilkammer ab. Das Rohrsegment überragt vorzugsweise das Bodensegment und verhindert so, dass bei der üblichen Durchströmung innerhalb der ersten Teilkammer sedimentierte Feststoffpartikel in das Ablaufrohr gelangen können.

Gemäß einer weiteren bevorzugten Ausgestaltung der Erfindung ist dem Einlass ein Abdichtmittel zur gasdichten Abdichtung zugeordnet. Hierbei lässt sich die Erfindung insbesondere von der Vorstellung leiten, dass das Gehäuse zylinderförmig ausgeführt ist und der Einlass durch eine der Zylinderöffnungen bestimmt wird. So ist z. B. der Einlass mit einer Stufe versehen, an deren Anlagefläche ein Dichtkörper anliegt, der üblicherweise in Umfangsrichtung umläuft. Es ist besonders bevorzugt, den Einlass mit einem Gewinde zu versehen, sodass der Auffangbehälter mit einem Anschluss des Flüssigkeitsabscheiders verbunden werden kann. Hierbei wird der Dichtkörper zwischen dem Anschluss und dem Einlass während des Dichtens verpresst. Als Dichtungsmaterial des Dichtkörpers eignet sich zum Beispiel besonders ein EPDM-Gummi.

Alternativ kann das Gehäuse auch als rechteckiger Kasten ausgebildet sein. An einer Oberseite des Gehäusekastens ist beispielsweise eine im Wesentlichen rechteckige Gehäuseöffnung vorgesehen, so dass das rechteckige Gehäuse insofern eine Art Wanne bildet, welche von der Trennwand in die zwei Teilkammern unterteilt ist. Die Gehäuseöffnung ist beispielsweise von einer Einlassplatte oberseitig verschlossen, in welcher im Bereich der zweiten Teilkammer eine Einlassöffnung vorgesehen ist. Die die Einlassplatte begrenzenden Ränder liegen beispielsweise an der Gehäuseöffnung vorgesehenen Stufenkantenflächen des Gehäuses auf. Das Gehäuse ist hierbei beispielsweise aus Kunststoff spritzgegossen oder alternativ aus einem metallischen Werkstoff druckgegossen, wobei die Einlassplatte zum Beispiel auch eine Metallplatte sein kann. In der an der Einlassplatte vorgesehenen Einlassöffnung ist besonders vorteilhafterweise ein Filter eingesetzt, welcher beispielsweise in der abzuscheidenden Flüssigkeit vorhandene Festpartikel daran hindert, in den Auffangbehälter zu gelangen und schlimmstenfalls den Ablauf zu verstopfen.

Um eine wasserstoffgasdichte Ausgestaltung des Flüssigkeitsabscheiders zu gewährleisten, ist es zweckmäßig, zumindest das Gehäuse des Auffangbehälters aus einem wasserstoffgasdichten Material auszubilden. Ein solches wasserstoffgasdichtes Material kann beispielsweise AlSiMg10, Edelstahl oder ein mit Keramik bzw. Metall gefüllter Kunststoff, insbesondere ein gefülltes PA 6.6 sein. Es versteht sich von selbst, zweckmäßigerweise auch weitere Teile des Flüssigkeitsabscheiders, welche mit zum Beispiel anodenseitig, insbesondere im Kreislauf geführtem Wasserstoffgas in Kontakt stehen, wasserstoffgasdicht auszubilden. Insbesondere hat die Erfindung in diesem Zusammenhang metallische Materialien, insbesondere Stahl bzw. Stahllegierungen im Sinn. Solche Materialien weisen eine besonders niedrige Wasserstoffpermeabilität auf.

Als Dichtmaterial zum wasserstoffdichten Anschluss des Auffangbehälters an einen Flüssigkeitsabscheidergrundkörper ist vorzugsweise ein weichmetallisches Material zu verwenden. Dieses weichmetallische Material wird vorzugsweise zwischen zwei sich gegenüberliegenden Flächen von jeweils einem an dem Auffangbehälter sowie dem Flüssigkeitsabscheidergrundkörper ausgebildeten Flansch dichtend verpresst. In diesem Zusammenhang wird der Einlass des Auffangbehälters als Flansch bezeichnet. Bei der wasserstoffgasdichten Verbindung ist an alle aus der Vakuumtechnik bekannten Ausgestaltungen gedacht. Zwei Flansche können demnach über Verbindungsbolzen miteinander verbunden werden, wobei die weichmetallische Dichtung derart gequetscht wird, dass Wasserstoff an dieser Verbindungsstelle nicht entweichen kann. Bei solchen weichmetallischen Dichtungen ist insbesondere an Kupfer-, kupferhaltige, versilberte Kupfer-, vergoldete Kupfer-, Messing-, bzw. Golddichtungen gedacht. Beispielsweise können aus der Vakuumtechnik bekannte planare Dichtringe Verwendung finden.

Der Auffangbehälter ist demnach vorzugsweise Teil eines Flüssigkeitsabscheiders.

Die Erfindung betrifft ferner ein Brennstoffzellensystem. Insofern liegt der Erfindung gemäß ihrem nebengeordneten Aspekt das Problem zugrunde, ein Brennstoffzellensystem anzugeben, insbesondere ein Brennstoffzellensystem für ein Kraftfahrzeug, dessen Effizienz insbesondere im Winterbetrieb erhöht ist.

Dieses Problem wird mit einem Brennstoffzellensystem mit den Merkmalen des nebengeordneten Anspruchs 14 gelöst. Demnach unterscheidet sich das erfindungsgemäße Brennstoffzellensystem dahingehend vom bekannten Stand der Technik, dass die Flüssigkeitsabscheideeinrichtung mit dem oben beschriebenen Auffangbehälter ausgestattet ist. Beim Betrieb des Brennstoffzellensystems, insbesondere direkt nach einem Kaltstart eines Kraftfahrzeugs, muss dementsprechend nur kurzzeitig die dem Auffangbehälter zugeordnete Heizreinrichtung eingeschaltet werden, um vorzugsweise nur einen kleineren Teil der in dem Auffangbehälter erstarrten, insbesondere gefrorenen Flüssigkeit aufzutauen oder zu erwärmen. So kann möglichst schnell nach dem Kaltstart die erste Flüssigkeit aus dem Brennstoffzellensystem ausgelassen werden.

Für die Steuerung einer solchen Heizeinrichtung gibt es verschiedene denkbare Lösungsmöglichkeiten:
Beispielsweise wird die Heizleistung der Heizeinrichtung direkt nach dem Start nur benötigt, wenn die Außentemperatur unterhalb eines gewissen Wertes, insbesondere einer Temperatur von 0°C, gefallen ist. So wird beispielsweise die Heizeinrichtung dann standardmäßig beim Kaltstart des Kraftfahrzeugs von einer Zuschalteinrichtung zugeschaltet, wenn eine Umgebungstemperatur unter einer vorgegebenen Solltemperatur von einem Temperatursensor gemessen wird. Die Heizeinrichtung kann dann beispielsweise so lange eingeschaltet bleiben, bis gerade die gesamte Flüssigkeit, die in der ersten Teilkammer enthalten ist, aufgetaut ist, jedoch die Flüssigkeit, die in der zweiten Teilkammer enthalten ist, noch zumindest zum überwiegenden Teil gefroren bleibt. Bei bekanntem Volumen der ersten Teilkammer kann die Heizleistung dementsprechend selektiv geregelt werden. Die für das Auftauen eines gegebenen Volumens der ersten Teilkammer erforderliche Energie kann beispielsweise zuvor berechnet und in einer Steuerung hinterlegt sein. Sofern eine Entscheidung getroffen wird, dass die Heizeinrichtung zugeschaltet wird, wird standardmäßig genau diese Wärmemenge respektive ein dieser Wärmemenge entsprechendes elektrisches Äquivalent der Heizeinrichtung zugeführt. Eine solche Steuerung lässt sich einfach hinterlegen und bedarf keiner gesonderten Regelung durch Messfühler oder dergleichen, die die tatsächliche Temperatur in der ersten Teilkammer erfassen.

Ergänzend oder alternativ können in der ersten Teilkammer Detektionseinrichtungen zur Detektion desjenigen Zeitpunktes, in dem alle Flüssigkeit in der ersten Teilkammer nach Zuschalten der Heizeinrichtung aufgetaut ist, vorgesehen sein. Detektiert nun die Detektionseinrichtung, dass die gesamte Flüssigkeit, die in der ersten Teilkammer vorhanden ist, aufgetaut ist, schaltet ein Steuersignal von einer Steuereinrichtung die Heizeinrichtung ab. Auch bei kalten Außentemperaturen friert die in dem Flüssigkeitsabscheider abgeschiedene Flüssigkeit üblicherweise nicht, wenn das Kraftfahrzeug länger in Betrieb ist (also in dem in Bezug auf den Auffangbehälter für einen Flüssigkeitsabscheider vorher erwähnten normalen Betriebszustand ist), und der Flüssigkeitsabscheider an die Abwärme des Brennstoffzellensystems oder, für den Fall eines Hybridfahrzeugs, mit der Abwärme eines Verbrennungsmotors gekoppelt ist. So kann auch eine Zeitmesseinrichtung vorgesehen sein, welche der Heizeinrichtung nach einer vorgegebenen Zeit ein Abschaltsignal gibt.

Der Temperatursensor, die Regeleinrichtung, die Steuereinrichtung oder auch die Zeitmesseinrichtung sind bevorzugt Teil des Brennstoffzellensystems.

Gemäß einer weiteren bevorzugten Ausgestaltung des nebengeordneten Aspektes soll zumindest eines der beiden Betriebsfluide in einer Ringleitung im Kreis geführt werden. Wie aus dem Stand der Technik bekannt, bietet eine Kreislaufführung zumindest eines Betriebsfluids, insbesondere des z. B. der Anodenraumzuleitung zugeleiteten Wasserstoffgases, eine erhöhte Effizienz des Brennstoffzellensystems. Sogenannte "Dead-end-Brennstoffzellensysteme" sind im Vergleich zu solchen kreislaufgeführten Brennstoffzellensystemen nicht so effizient, weil das Betriebsfluid an der jeweiligen Elektrode aufgebraucht werden muss, bevor neues Betriebsfluid in den Anoden- bzw. Kathodenraum nachströmen kann.

Gemäß einer weiteren bevorzugten Ausgestaltung des nebengeordneten Aspektes ist der Auffangbehälter der Anodenraumzuleitung zugeordnet. Es versteht sich von selbst, dass, wenn in der Luft vorhandener Sauerstoff als Oxidationsmittel dem Kathodenraum zugeleitet wird, die Luft bzw. der Sauerstoff nicht im Kreis geführt werden muss. Nachdem die Luft dem Kathodenraum und somit der Kathode der Membranelektrodeneinheit zugeführt wurde, wird diese üblicherweise direkt an die Umgebung abgeleitet. Ein üblicherweise relativ kostenintensives Betriebsfluid, welches anodenseitig der Membranelektrodeneinheit zugeführt wird, wird jedoch zweckmäßigerweise im Kreislauf geführt, um möglichst wenig dieses Betriebsfluids zu vergeuden. Insbesondere in dem Fall, dass Wasserstoff als anodenseitiges Betriebsfluid verwendet wird, ist bei kontinuierlicher Durchströmung des Anodenraums eine Kreislaufführung zu bevorzugen, um den Wasserstoff nicht in die Umgebung zu leiten, auch um beispielsweise eine Knallgasreaktion zu vermeiden.

Es versteht sich von selbst, dass vorzugsweise als Betriebsfluid sowohl anoden- als auch kathodenseitig ein Gas zu verwenden ist, aus welchem in den Flüssigkeitsabscheider die in dem Gas enthaltene Flüssigkeit abgeschieden wird. Der Flüssigkeitsabscheider kann aber auch so ausgebildet sein, dass zumindest eine von zumindest zwei Flüssigkeiten, die das Betriebsfluid bilden, zumindest teilweise abgeschieden wird. So wäre denkbar, dass der Wasseranteil von als Betriebsfluid dienendem Methanol in dem Flüssigkeitsabscheider teilweise abgeschieden wird.

Die vorliegende Erfindung betrifft des Weiteren ein verbessertes Verfahren zum Betrieb eines Flüssigkeitsabscheiders mit den Merkmalen von Anspruch 18. Das erfindungsgemäße Verfahren ist bevorzugt für den Betrieb eines Flüssigkeitsabscheiders in einem Brennstoffzellensystem für ein Kraftfahrzeug gedacht.

Erfindungsgemäß wird eine in dem Flüssigkeitsabscheider abgeschiedene Flüssigkeit in der einen von zumindest zwei Teilkammern zunächst gesammelt. Der Flüssigkeitsstand steigt hierbei in der einen Teilkammer an, bis ein vorher bestimmtes Volumen erreicht ist. Die in der einen Teilkammer abgeschiedene Flüssigkeit, insbesondere das Wasser, wird hierbei insbesondere über einen Überlauf in die andere Teilkammer übergeleitet. Aus der anderen Teilkammer, in welcher die in diese übergeleitete Flüssigkeit gesammelt wird, kann, wenn eine vorgegebene Randbedingung erfüllt ist, die Flüssigkeit abgelassen werden. Insbesondere ist die eine Teilkammer die Bezug auf den vorerwähnten Auffangbehälter für einen Flüssigkeitsabscheider genannte zweite Teilkammer und die andere Teilkammer die entsprechend vorerwähnte erste Teilkammer.

Eine solche vorgegebene Randbedingung kann insbesondere erreicht sein, wenn die andere Teilkammer bis zu einem vorgegebenen Volumen gefüllt ist. Eine weitere mögliche Randbedingung kann ebenso ein Feuchtigkeitsgehalt eines Betriebsfluids sein, mit dem z. B. ein Brennstoffzellensystem wie es vorher beschrieben ist betrieben wird. Eine andere Randbedingung, wie z. B. die Zusammensetzung eines Betriebsfluids, kann ebenso gewählt werden.

Ein Ablass-Zeitpunkt, bzw. -Frequenz und/oder -Dauer, für den in Anspruch 14 genannten Verfahrensschritt d) kann in Abhängigkeit der jeweiligen Anforderungen beliebig gewählt werden. Dadurch, dass z. B. die andere Teilkammer nur ein relativ kleines Volumen im Verhältnis zu der einen Teilkammer aufweist, läuft erstere üblicherweise relativ schnell mit Flüssigkeit voll, welche aus der einen Teilkammer in die andere Teilkammer übergeleitet worden ist. Ebenso aufgrund des niedrigen Volumens der anderen Teilkammer kann die Flüssigkeit aus dieser Teilkammer verhältnismäßig schnell abgelassen werden (kurze Ablassdauer bei hoher Ablassfrequenz) und stört den Betrieb insbesondere eines Brennstoffzellensystems wenig, da während des kurzzeitigen Ablassens der Flüssigkeit aus der anderen Teilkammer nur wenig gasförmiges Betriebsfluid wie z. B. Wasserstoff entweichen kann.

Demnach gibt das erfindungsgemäße Verfahren eine einfache Maßnahme an, wie verhältnismäßig große Mengen Flüssigkeit abgeschieden werden können und trotzdem im Winter ein effizienter Betrieb z. B. eines Brennstoffzellensystems unter Gasdichtbedingungen möglich ist.

Gemäß einer bevorzugten Weiterbildung des verfahrensmäßigen Aspekts wird das Erstarren der übergeleiteten Flüssigkeit erfasst und die in Verfahrensschritt c) übergeleitete Flüssigkeit wird wärmebeaufschlagt. Das Erfassen des Erstarrens der Flüssigkeit kann auch indirekt geschehen, z. B. wenn ein Außentemperatursensor an einem Kraftfahrzeug eine Außentemperatur misst oder bei Unterschreiten eines bestimmten Grenzwertes ein Erstarren der Flüssigkeit in dem Flüssigkeitsabscheider vermutet.

Besonders bevorzugt wird das Erstarren der Flüssigkeit mittels einer Messeinrichtung erfasst, welche direkt der anderen Teilkammer zugeordnet ist. Für das erfindungsgemäße Verfahren reicht es völlig aus, dass nur ein Erstarren der in Verfahrensschritt c) übergeleiteten Flüssigkeit erfasst wird. Üblicherweise ist auch die in der einen Teilkammer in Verfahrensschritt a) gesammelte Flüssigkeit zu diesem Zeitpunkte erstarrt. Gleichwohl kann es vorteilhaft sein, wenn von der Messeinrichtung erfasst wird, ob die in Verfahrensschritt a) gesammelte Flüssigkeit und die in Verfahrensschritt c) übergeleitete Flüssigkeit beide erstarrt sind. Die erstarrte Flüssigkeit, welche in Verfahrensschritt c) übergeleitet wird, wird bevorzugt so lange mit Wärme beaufschlagt, bis die in der anderen Teilkammer vorhandene Flüssigkeit komplett geschmolzen ist. Direkt hiernach kann mit Verfahrensschritt d), dem zumindest teilweise Ablassen der gesamten übergeleiteten Flüssigkeit, begonnen werden. Wenn die in der anderen Teilkammer gesammelte Flüssigkeit geschmolzen ist, wird die Wärmebeaufschlagung der Flüssigkeit vorteilhafterweise gestoppt, sodass die in der einen Teilkammer gesammelte Flüssigkeit im Wesentlichen nicht aufgeschmolzen wird. Dies lässt einen sehr effizienten Betrieb einer Heizeinrichtung zu, über welchen die Flüssigkeit bevorzugterweise mit Wärme beaufschlagt wird.

Gemäß einer weiteren bevorzugten Ausgestaltung des verfahrensmäßigen Aspekts soll Flüssigkeit im Wesentlichen unter gasdichten Bedingungen abgeschieden werden. Insbesondere erfolgt dies unter wasserstoffgasdichten Bedingungen. Es versteht sich von selbst, dass während des zumindest teilweisen Ablassens in Verfahrensschritt d) keine gasdichten Bedingungen vorhanden sind.

Besonders bevorzugt wird das Verfahren zum Betrieb des Flüssigkeitsabscheiders verwendet, welcher den oben beschriebenen Auffangbehälter enthält. Das Verfahren ist besonders geeignet für den Winterbetrieb eines Brennstoffzellensystems.

Weitere Einzelheiten und Vorteile der vorliegenden Erfindung ergeben sich aus der nachfolgenden Beschreibung von zwei Ausführungsbeispielen in Verbindung mit der Zeichnung. In dieser zeigen:
- Figur 1: eine perspektivische, teilweise geschnittene Längsschnittansicht eines ersten Ausführungsbeispiels eines Auffangbehälters für einen Flüssigkeitsabscheider;.
- Figur 2a: eine perspektivische, teilweise geschnittene Längsschnittansicht eines zweiten Ausführungsbeispiel eines Auffangbehälters für einen Flüssigkeitsabscheider,
- Figur 2b: das zweite Ausführungsbeispiel gemäß Figur 2a in einer im Vergleich zu der Darstellung gemäß Figur 2a leicht in Querrichtung versetzten teilweise geschnittenen Längsschnittansicht,
- Figur 2c: eine teilweise segmentierte Querschnittsansicht des zweiten Ausführungsbeispiels,
- Figur 2d: eine Explosionsdarstellung des zweiten Ausführungsbeispiels.

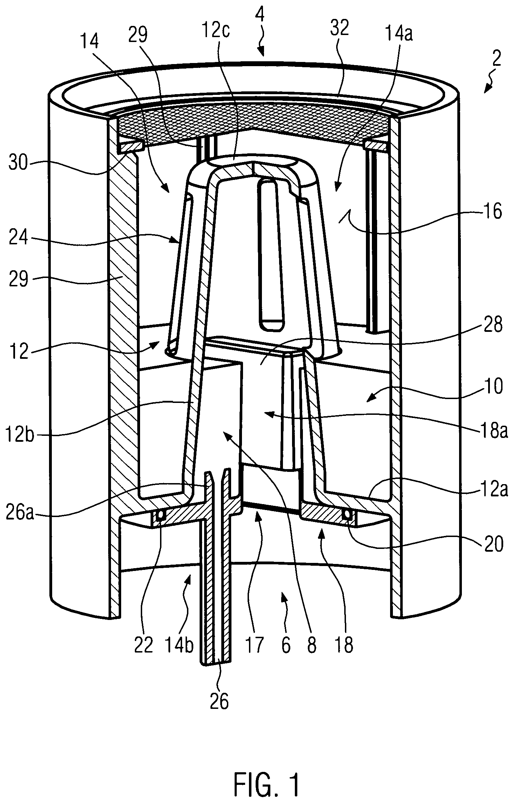

Der in Figur 1 der Zeichnung gezeigte erste Ausführungsbeispiel eines Auffangbehälters hat einen zylindrischen Gehäusemantel 2, welcher eine Einlassöffnung 4 und eine der Einlassöffnung 4 entgegen gesetzte auslassseitige Öffnung 6 hat. Innerhalb des Gehäusemantels 2 sind zwei Teilkammern 8, 10 ausgebildet, die nachfolgend als erste Teilkammer 8 und zweite Teilkammer 10 bezeichnet werden. Die beiden Teilkammern 8, 10 werden von einem Kuppelabschnitt 12 voneinander getrennt, welcher innerhalb eines von dem Gehäusemantel 2 gebildeten Hohlraums 14 angeordnet ist. Der Kuppelabschnitt 12 ist integral mit einer Innenwand 16 des Gehäusemantels 2 verbunden und trennt den Hohlraum 14 in einen oberseitigen Aufnahmeraum 14a und einen auslassseitigen Aufnahmeraum 14b (unterseitig). Der Kuppelabschnitt 12 hat einen Bodenabschnitt 12a, einen aufragenden Wandabschnitt 12b und einen Kappenabschnitt 12c. Der Kuppelabschnitt 12 bildet auslassseitig eine Kuppelöffnung 17 aus, welche von einem als separates Teil ausgebildeten Bodenelement 18 verschlossen ist. Das im Wesentlichen scheibenförmige Bodenelement 18 liegt auslassseitig dichtend an dem Bodenabschnitt 12a an. Hierzu ist ein in einer Ringnut 20 des zylindrischen Bodenelementes 18 platzierter elastomerer Ring 22 gegen den Bodenabschnitt 12a gedrückt.

Die erste Teilkammer 8 wird folglich von dem Bodenelement 18, dem aufragenden Wandabschnitt 12b und dem Kappenabschnitt 12c begrenzt. Die zweite Teilkammer 10 wird durch den aufragenden Wandabschnitt 12b, die Innenwandung 16 des Gehäuseelementes 2 sowie den Bodenabschnitt 12a begrenzt und ist einlassseitig zu der Einlassöffnung 4 offen. Dementsprechend ist die zweite Teilkammer 10 durch einen zwischen dem Kuppelabschnitt 12 und der Innenwandung 16 gebildeten Ringraum gebildet.

Der Kuppelabschnitt 12 ist koaxial innerhalb des Gehäusemantels 2 angeordnet, wobei beide rotationssymmetrisch ausgeführt sind. In dem aufragenden Wandabschnitt 12c des Kuppelabschnittes 12 sind in Längsrichtung verlaufende Langlöcher 24 ausgespart, welche als Überlauf dienen. Durch die Langlöcher 24 kann in der zweiten Teilkammer 10 abgeschiedene Flüssigkeit in die erste Teilkammer 8 gelangen, sofern das maximale Teilkammervolumen erreicht ist. Das die erste Teilkammer 8 auslassseitig begrenzende Bodenelement 18 ist azentrisch mit einem Ablaufrohr 26 versehen, welches sich in Längsrichtung des Gehäuses erstreckt. Das Ablaufrohr 26 ist integral mit dem Bodenelement 18 verbunden. Ein oberes Rohrsegment des Ablaufrohres 26 ragt in die erste Teilkammer 8 hinein und bildet hier ein Feststoffrückhaltemittel 26a aus. Dieses verhindert, dass auf dem Bodenelement 18 sedimentierte Feststoffpartikel in das Ablaufrohr 26 gelangen können und den Ablauf zusetzen. Aus dem Bodenelement 18 ragt ferner ein quaderförmiger Heizfinger 28 in die erste Teilkammer 8 hinein, der diese innen mit einem Innenwandungsteil 18a des Bodenelementes 18 begrenzt. Auf seiner der Auslassseite zugewandten Seite ist der quaderförmige Heizfinger offen und nimmt ein Heizelement wie z. B. ein PTC-Element auf. Das nicht dargestellte Heizelement ist wärmeleitend mit der Wandung des quaderförmigen Heizfingers 28 verbunden, sodass eine Wärmebeaufschlagung von in der ersten Teilkammer 8 enthaltenen Flüssigkeit direkt über die Wandungen des quaderförmigen Heizfingers 28 erfolgt.

Der Gehäusemantel 2 ist mit Längsstreben 29 verstärkt, deren einlassseitige Enden nahe der Einlassöffnung 4 Stufenkanten 30 ausbilden, auf denen ein elastomerer Dichtring 32 aufliegt. Der Dichtring 32 ermöglicht eine wasserstoffdichte Montage des Auffangbehälters an einem Anschlussflansch des Flüssigkeitsabscheiders.

Bei der Abscheidung von Flüssigkeit aus einem Betriebsfluid gelangt die abgeschiedene Flüssigkeit durch die Einlassöffnung 4 in die zweite Teilkammer 10. Die zweite Teilkammer 10 füllt sich nach und nach während des Betriebs mit abgeschiedener Flüssigkeit. Wenn die in der zweiten Teilkammer 10 abgeschiedene Flüssigkeit eine Unterkante der Langlöcher 24 erreicht hat (maximales Kammervolumen), läuft diese durch die Langlöcher 24 über in die erste Teilkammer 8, welche sich demnach füllt. Wenn eine vorgegebene Randbedingung erfüllt ist, kann das üblicherweise im Betriebszustand geschlossene Ablaufrohr geöffnet werden, um zumindest einen Teil der in der ersten Teilkammer 8 gesammelten Flüssigkeit abzulassen.

Wird der Auffangbehälter z. B. in einem Brennstoffzellensystem eines Kraftfahrzeugs verwendet, gefriert bei Temperaturen unter 0°C (in Wintersituationen) die in den beiden Teilkammern 8,10 abgeschiedene Flüssigkeit nach Abstellen des Fahrzeugs. Nach einem Kaltstart des Kraftfahrzeugs verhindert die in beiden Teilkammern 8,10 gefrorene Flüssigkeit einen effizienten Betrieb des Brennstoffzellensystems, weil keine weitere Flüssigkeit in dem Flüssigkeitsabscheider mehr abgeschieden und auch nicht abgelassen werden kann. Bei dem in Fig. 1 dargestellten ersten Ausführungsbeispiel reicht es aus, mittels des Heizelementes nur das in der ersten Teilkammer 8 befindliche erstarrte Flüssigkeitsvolumen zu schmelzen. Die in der zweiten Teilkammer 10 enthaltene gefrorene Flüssigkeit hingegen muss nicht unbedingt geschmolzen werden. Sobald die in der ersten Teilkammer 8 vorhandene Flüssigkeit geschmolzen ist, kann das Ablaufrohr 26 geöffnet werden und ein effizienter Betrieb des Brennstoffzellensystems ist möglich.

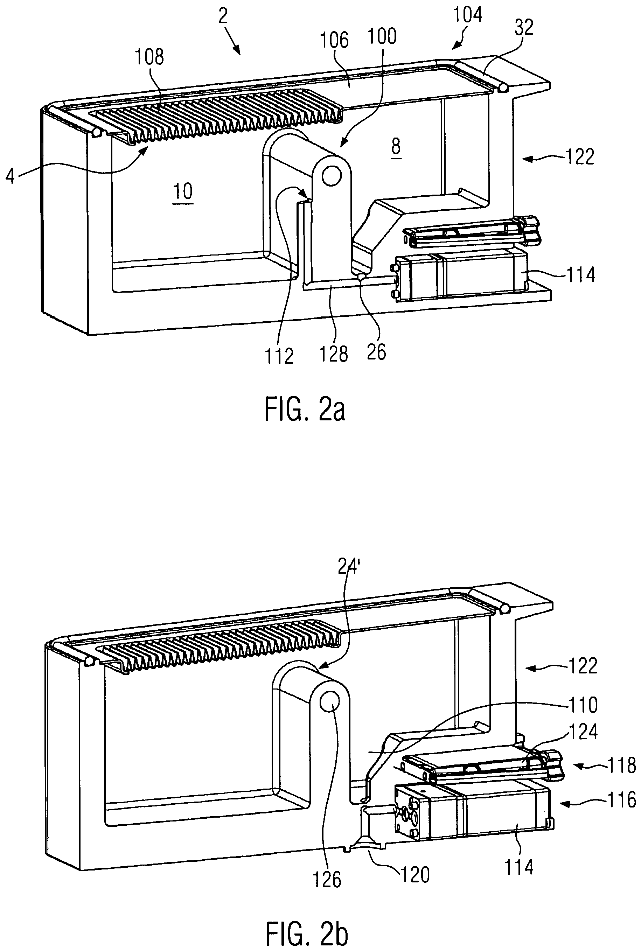

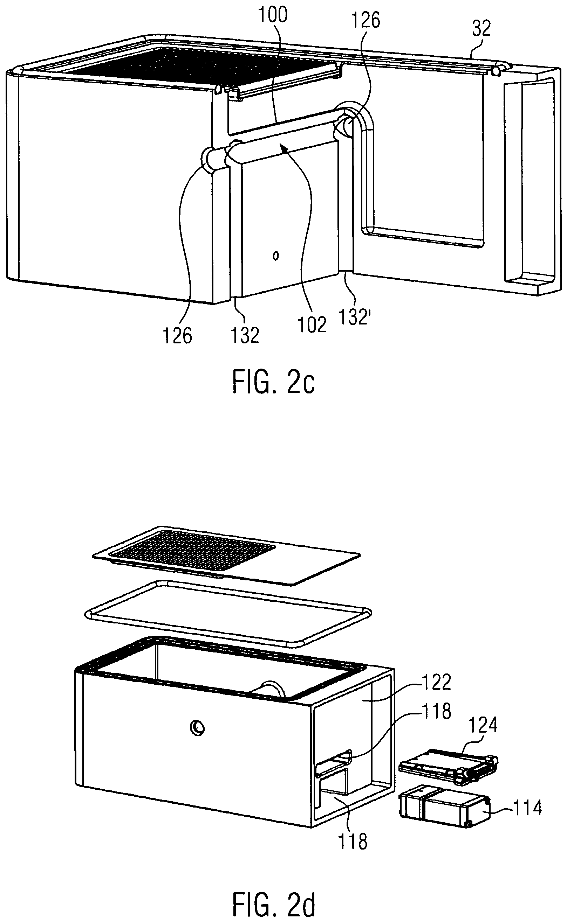

Figur 2a zeigt ein zweites Ausführungsbeispiel eines Auffangbehälters für einen Flüssigkeitsabscheider mit einem im Wesentlichen rechteckigen Gehäuse 2, in welchem eine erste Teilkammer 8 und eine zweite Teilkammer 10 in Längsrichtung des Gehäuses 2 nebeneinander angeordnet sind. Die beiden Teilkammern 8, 10 sind über eine Trennwand 100 voneinander getrennt, wobei die Trennwand 100, wie in Figur 2c dargestellt, von einer Vorwärmleitung 102 durchzogen ist. Die Trennwand 100 endet im Wesentlichen auf ca. 2/3 der Höhe einer im Inneren des Gehäuses 2 gebildeten Kammer. Oberseitig weist das Gehäuse 2 eine Gehäuseöffnung 104 auf, in welcher eine Einlassplatte 106 dichtend eingesetzt. Die Einlassplatte 106 ist in einem Bereich, in dem diese die zweite Teilkammer 10 überdeckt, mit einer Einlassöffnung 4 versehen, in welche ein Filter 108 eingesetzt ist. Der Filter 108 ist zieharmonikaförmig aufgebaut und verhindert, dass Feststoffpartikel in den Auffangbehälter, insbesondere in die zweite Teilkammer 10, gelangen.

Zwischen einer Unterseite der Einlassplatte 106 und einem der Einlassplatte zugewandten Ende der Trennwand 100 ist ein Zwischenraum 24' ausgebildet (vgl. Fig. 2b), welcher einen Überlauf der zweiten Teilkammer 10 zu der ersten Teilkammer 8 bildet. Die erste Teilkammer 8 weist an deren Unterseite einen im Querschnitt im Wesentlichen V-förmigen Endabschnitt 110 auf, in welchem sich abgeschiedene Flüssigkeit sammeln kann. Mit anderen Worten verjüngt sich die erste Teilkammer 8 demnach zu einem Ablauf 26 hin, der in einem Bodensegment der ersten Teilkammer 8 vorgesehen ist. Die zweite Teilkammer 10 weist ungefähr auf 2/3 der Höhe der Trennwand 100 einen weiteren Ablauf 112 auf, welcher wie der Ablauf 26 an ein seitlich in eine an dem Gehäuse ausgebildete Ventiltasche eingestecktes Ventil 114 angeschlossen ist. Sowohl der Ablauf 26 der ersten Teilkammer 8 als auch der weitere Ablauf 112 der zweiten Teilkammer 10 können folglich über das Ventil 114 geöffnet bzw. geschlossen werden. Der Ablauf 26 sowie der weitere Ablauf 112 sind rohrförmig in dem Gehäuse 2 ausgebildet und miteinander verbunden (vgl. Fig. 2a). Dieses Rohr 128 ist an eine erste Ventilöffnung angeschlossen, wie es in Figur 2a zu erkennen ist. Ein weiteres, innerhalb des Gehäuses ausgebildetes Rohr 130 ist an eine zweite Ventilöffnung angeschlossen und mündet in einer an einer Unterseite des Gehäuses vorgesehenen Ablauföffnung 120 (vgl. Fig. 2b). Bei der in Figur 2a dargestellten Längsschnittansicht ist zu erkennen, dass der Ablauf 26 der ersten Teilkammer 8 mit dem weiteren Ablauf 112 der zweiten Teilkammer 10 über das in dem Gehäuse 2 vorgesehene Rohr 128 kommuniziert. Sowohl die in der ersten Teilkammer 8 als auch die in der zweiten Teilkammer 10 gesammelte Flüssigkeit kann folglich bei geschlossenem Ventil 114 nicht über das Ventil 114 und die Ablauföffnung 120 aus dem Gehäuse 2 abfließen. Der weitere Ablauf 112 ist in dem Ausführungsbeispiel in einer solchen Höhe in der zweiten Teilkammer 10 vorgesehen, dass zwischen dem den Überlauf bildenden Zwischenraum 24' und dem weiteren Ablauf 112 ein zusätzliches Aufnahmevolumen für in der zweiten Teilkammer abzuscheidende Flüssigkeit gebildet ist. Wenn der weitere Ablauf 112 geöffnet ist, reicht der Flüssigkeitsstand der in der zweiten Teilkammer abgeschiedenen Flüssigkeit nur von dem Boden der zweiten Teilkammer 10 bis zur Höhe der Öffnung des Überlaufs 112.

In Figur 2b ist der Längsschnitt durch den Auffangbehälter versetzt zu dem Längsschnitt aus Figur 2a geführt. Hierdurch wird deutlich, dass das weitere Rohr 130 von dem Ventil 114 in dem Gehäuse 2 zu der Ablauföffnung 120 führt, die unten an dem Gehäuse 2 ausgebildet ist.

In einer Seitenwand 122 des Gehäuses 2 sind eine Ventiltasche 116 sowie eine Heiztasche 118 ausgebildet, in welche die Heizeinrichtung 124 bzw. das Ventil 114 eingesetzt sind (vgl. Fig. 2d). Das in den Figuren 2 dargestellte Ausführungsbeispiel einer Heizeinrichtung 124 hat ein Gehäuse mit einem Keilelement, so dass die Heizeinrichtung 124 fest zwischen Innenwandabschnitten der Heiztasche 118 verspannt werden kann. Das Gehäuse der Heizeinrichtung 124 weist schräg zueinander verlaufende Keilflächen auf, welche bei eingesetzter Heizeinrichtung 124 an ebenso schräg verlaufenden Innenwandabschnitten der Heiztasche 118 anliegen. Das Ventil 114 sowie die Heizeinrichtung 124 können jeweils als separate Bauteile, wie in Figur 2c dargestellt, seitlich in das in einem Spritzgussverfahren aus einem Kunststoffmaterial hergestellte Gehäuse 2 eingeschoben werden.

Wie in Figur 2c gezeigt, ist die Vorwärmleitung 102 im Wesentlichen in der Trennwand 100 als rechteckige Schleifen ausgebildet. Auf der Unterseite des Gehäuses 2 ist hierzu jeweils eine Vorwärmeinlassöffnung 132 sowie eine Vorwärmauslassöffnung 132' vorgesehen, an welche zum Beispiel ein Schlauch angeschlossen werden kann, mit dem ein vorerwärmtes Betriebsmittel der Vorwärmleitung 102 zugeführt werden kann. An gegenüberliegenden Seitenwänden des Gehäuses 2 und in Verlängerung des horizontalen Leitungsschenkels der Vorwärmleitung 102 sind Herstellöffnungen 126 erkennbar, die beim Verformen der Vorwärmleitung 102 ausgebildet und später verschlossen werden. Die Vorwärmleitung 102 ist in dem in Figur 2c dargestellten Ausführungsbeispiel in einem Spritzgussverfahren derart hergestellt, dass die diese begrenzenden Wandungen aus demselben Material ausgebildet sind wie die Trennwand 100 bzw. das Gehäuse 2 selbst. Die Vorwärmleitung 102 kann auch aus einem separaten Rohr, insbesondere einem metallischen Rohr, ganz besonders bevorzugt aus einem Rohr aus Edelstahl ausgebildet sein, welches im Zuge der spritzguss- bzw. druckgusstechnischen Herstellung des Gehäuses 2 bzw. der Trennwand 100 umspritzt wird.

Zur dichtenden Verbindung des Auffangbehälters mit dem Flüssigkeitsabscheider ist oberseitig an dem rechteckigen Gehäuse 2 eine Dichtung 32 vorgesehen, welche in einer das Gehäuse 2 oberseitig umlaufenden Nut gehalten wird.

Auch in dem zweiten Ausführungsbeispiel sind beide Teilkammern 8, 10 wie in dem in Figur 1 gezeigten Ausführungsbeispiel höhengleich ausgeführt.

### Bezugszeichenliste

- 2: Gehäusemantel/Gehäuse
- 4: Einlassöffnung
- 6: auslassseitige Öffnung
- 8: erste Teilkammer
- 10: zweite Teilkammer
- 12: Kuppelabschnitt
- 12a: Bodenabschnitt
- 12b: aufragender Wandabschnitt
- 12c: Kappenabschnitt
- 14: Hohlraum
- 14a: einlassseitiger Aufnahmeraum
- 14b: auslassseitiger Aufnahmeraum
- 16: Innenwandung
- 17: Kuppelöffnung
- 18: Bodenelement
- 18a: Innenwandungsteil
- 20: Ringnut
- 22: elastomerer Ring
- 24: Langloch
- 24': Zwischenraum
- 26: Ablaufrohr/Ablauf
- 26a: Feststoffrückhaltemittel/Rohrsegment
- 28: quaderförmiger Heizfinger
- 29: Längsstreben
- 30: Stufenkante
- 32: elastomerer Dichtring/Dichtung
- 100: Trennwand
- 102: Vorwärmleitung
- 104: Gehäuseöffnung
- 106: Einlassplatte
- 108: Filter
- 110: V-förmiger Endabschnitt
- 112: weiterer Ablauf
- 114: Ventil
- 116: Ventiltasche
- 118: Heiztasche
- 120: Ablauföffnung
- 122: Seitenwand
- 124: Heizeinrichtung
- 126: Herstellöffnung
- 128: Rohr
- 130: weiteres Rohr
- 132: Vorwärmeinlassöffnung
- 132': Vorwärmauslassöffnung

## Patentansprüche

1. Verwendung eines Auffangbehälters für einen Flüssigkeitsabscheider eines Brennstoffzellensystems, wobei der Auffangbehälter ein Gehäuse (2) hat, welches einen Einlass (4) sowie eine Abscheidekammer (8, 10) und einen Ablauf (26) zum Ablassen von abgeschiedener Flüssigkeit aufweist, die Abscheidekammer in zumindest zwei Teilkammern (8, 10) geteilt ist, die über einen Überlauf (24, 24') miteinander kommunizieren und der ersten Teilkammer (8) eine Heizeinrichtung (28, 124) und der Ablauf (26) zugeordnet sind.

2. Verwendung eines Auffangbehälters nach Anspruch 1, **dadurch gekennzeichnet, dass** die erste Teilkammer (8) ein kleineres Aufnahmevolumen als die zweite Teilkammer (10) aufweist.

3. Verwendung eines Auffangbehälters nach einem der vorherigen Ansprüche 1 oder 2, **dadurch gekennzeichnet, dass** innerhalb einer Trennwand, welche zwischen der ersten Teilkammer (8) und der zweiten Teilkammer (10) vorgesehen ist, eine Vorwärmleitung ausgebildet ist.

4. Verwendung eines Auffangbehälters nach einem der vorhergehenden Ansprüche, **dadurch gekennzeichnet, dass** die erste Teilkammer (8) innerhalb der zweiten Teilkammer (10) angeordnet ist.

5. Verwendung eines Auffangbehälters nach einem der vorherigen Ansprüche, **dadurch gekennzeichnet, dass** die beiden Teilkammern (8, 10) im Wesentlichen koaxial zueinander angeordnet sind.

6. Verwendung eines Auffangbehälters nach einem der vorherigen Ansprüche, **dadurch gekennzeichnet, dass** die erste Teilkammer (8) von einer wärmeleitend mit der Heizeinrichtung (28, 124) gekoppelten Wandung begrenzt ist.

7. Verwendung eines Auffangbehälters nach einem der vorherigen Ansprüche, **dadurch gekennzeichnet, dass** ein dem Ablauf (26) zugeordnetes Ventil (114) und die Heizeinrichtung (124) seitlich auf der selben Seite des Gehäuses (2) in an dem Gehäuse (2) ausgebildete Taschen (116, 118) eingesetzt sind.

8. Verwendung eines Auffangbehälters nach einem der vorherigen Ansprüche, **dadurch gekennzeichnet, dass** der zweiten Teilkammer (10) ein weiterer Ablauf (112) zugeordnet ist, welcher in Höhenrichtung der zweiten Teilkammer (10) zwischen dem Überlauf (24') und einem unteren Ende der zweiten Teilkammer (10) angeordnet ist.

9. Verwendung eines Auffangbehälters nach einem der vorhergehenden Ansprüche, **gekennzeichnet durch** einen Kuppelabschnitt (12), welcher einteilig mit dem Gehäuse (2) ausgeformt ist, der einen aufragenden Wandabschnitt (12b) umfasst, der die beiden Teilkammern (8, 10) trennt und den Überlauf (24) ausbildet.

10. Verwendung eines Auffangbehälters nach Anspruch 9, **dadurch gekennzeichnet, dass** der aufragende Wandabschnitt (12b) konisch ausgebildet ist.

11. Verwendung eines Auffangbehälters nach einem der Ansprüche 9 oder 10, **dadurch gekennzeichnet, dass** die erste Teilkammer (8) von einem dichtend an dem Kuppelabschnitt (12) anliegenden Bodenelement (18) begrenzt ist, dem die Heizeinrichtung (28) zugeordnet ist.

12. Verwendung eines Auffangbehälters nach einem der vorherigen Ansprüche, **dadurch gekennzeichnet, dass** der Ablauf (26) ein Feststoffrückhaltemittel (26a) aufweist.

13. Verwendung eines Auffangbehälters nach einem der vorherigen Ansprüche, **dadurch gekennzeichnet, dass** dem Einlass (4) ein Abdichtmittel (32) zur gasdichten Abdichtung, insbesondere wasserstoffgasdichten Abdichtung zugeordnet ist.

14. Brennstoffzellensystem mit einer Brennstoffzelle, welche einen Kathodenraum und einen Anodenraum enthält, einer Anodenraumzuleitung, einer Kathodenraumzuleitung und einer der Anodenraumzuleitung und/oder der Kathodenraumzuleitung zugeordneten Flüssigkeitsabscheideeinrichtung, wobei die Flüssigkeitsabscheideeinrichtung einen Auffangbehälter mit einem Gehäuse hat, welches einen Einlass (4) sowie eine Abscheidekammer (8, 10) und einen Ablauf (26) zum Ablassen von abgeschiedener Flüssigkeit aufweist, **dadurch gekennzeichnet,**
**dass** die Abscheidekammer in zumindest zwei Teilkammern (8, 10) geteilt ist, die über einen Überlauf (24, 24') miteinander kommunizieren und der ersten Teilkammer (8) eine Heizeinrichtung (28, 124) und der Ablauf (26) zugeordnet sind.

15. Brennstoffzellensystem nach Anspruch 14, **dadurch gekennzeichnet, dass** die Anodenraumzuleitung und/oder die Kathodenraumzuleitung als Ringleitung zur Kreislaufführung eines Betriebsfluids ausgebildet sind.

16. Brennstoffzellensystem nach Anspruch 14 oder 15, **dadurch gekennzeichnet, dass** der Auffangbehälter der Anodenraumzuleitung zugeordnet ist.

17. Brennstoffzellensystem nach einem der Ansprüche 14 bis 16, **dadurch gekennzeichnet, dass** der Auffangbehälter nach zumindest einem der Ansprüche 2 bis 13 weitergebildet ist.

18. Verfahren zum Betrieb eines Flüssigkeitsabscheiders eines Brennstoffzellensystems, der einen Auffangbehälter mit einem Gehäuse (2) hat, welches eine Abscheidekammer (8, 10) aufweist, enthaltend die Verfahrensschritte
a) Sammeln eines vorherbestimmten Volumens an abgeschiedener Flüssigkeit in einer Teilkammer (10) der Abscheidekammer (8, 10);
b) Überleiten der abgeschiedenen Flüssigkeit in eine andere Teilkammer (8) der Abscheidekammer (8, 10) nachdem das vorherbestimmte Volumen der abgeschiedenen Flüssigkeit gesammelt ist, während das vorherbestimmte Volumen der abgeschiedenen Flüssigkeit in der einen Teilkammer (8) konstant bleibt;
c) Sammeln der übergeleiteten Flüssigkeit in der anderen Teilkammer (8);
d) zumindest teilweises Ablassen der gesammelten übergeleiteten Flüssigkeit, wenn eine Randbedingung erfüllt ist;
wobei ein Erstarren der in Verfahrensschritt c) übergeleiteten Flüssigkeit erfasst und die erstarrte übergeleitete Flüssigkeit mit Wärme von einer Heizeinrichtung (28,124) beaufschlagt wird.

19. Verfahren nach Anspruch 18, **dadurch gekennzeichnet, dass** die erstarrte Flüssigkeit so lange mit Wärme beaufschlagt wird, bis eine vorgegebene weitere Randbedingung erfüllt ist.

20. Verfahren nach einem der vorhergehenden Ansprüche 17 bis 19 **dadurch gekennzeichnet, dass** die Verfahrensschritte a) bis c) unter gasdichten Bedingungen durchgeführt werden.

## Claims

1. The use of a collecting vessel for a liquid separator of a fuel cell system, wherein the collecting vessel has a housing (2) comprising an inlet (4) as well as a separation chamber (8, 10) and an outlet (26) for discharging separated liquid, the separation chamber is divided into at least two subchambers (8, 10) communicating with each other via an overflow (24, 24') and the first subchamber (8) has assigned thereto a heating unit (28, 124) and the outlet (26).

2. The use of a collecting vessel according to claim 1, **characterized in that** the capacity of the first subchamber (8) is smaller than that of the second subchamber (10).

3. The use of a collecting vessel according to one of the preceding claims 1 or 2, **characterized in that** a preheating conduit is formed within a partition provided between the first subchamber (8) and the second subchamber (10).

4. The use of a collecting vessel according to one of the preceding claims, **characterized in that** the first subchamber (8) is arranged within the second subchamber (10).

5. The use of a collecting vessel according to one of the preceding claims, **characterized in that** the two subchambers (8, 10) are arranged substantially coaxially with one another.

6. The use of a collecting vessel according to one of the preceding claims, **characterized in that** the first subchamber (8) is delimited by a wall that is coupled to the heating unit (28, 124) in a thermoconducting manner.

7. The use of a collecting vessel according to one of the preceding claims, **characterized in that** a valve (114), which is assigned to the outlet (26), and the heating unit (124) are placed in pockets (116, 118) formed laterally on the housing (2) on the same side of the housing (2).

8. The use of a collecting vessel according to one of the preceding claims, **characterized in that** the second subchamber (10) has assigned thereto a further outlet (112) arranged in the height direction of the second subchamber (10) between the overflow (24') and a lower end of the second subchamber (10).

9. The use of a collecting vessel according to one of the preceding claims, **characterized by** a dome-shaped portion (12) which is formed integrally with the housing (2), which comprises a wall section (12b) that rises up, which separates the two subchambers (8, 10) and forms the overflow (24).

10. The use of a collecting vessel according to claim 9, **characterized in that** the rising wall section (12b) is conical in shape.

11. The use of a collecting vessel according to one of the claims 9 or 10, **characterized in that** the first subchamber (8) is delimited by a base element (18) which is in sealing contact with the dome-shaped portion (12) and which has the heating unit (28) assigned thereto.

12. The use of a collecting vessel according to one of the preceding claims, **characterized in that** the outlet (26) comprises a solids retaining unit (26a).

13. The use of a collecting vessel according to one of the preceding claims, **characterized in that** the inlet (4) has assigned thereto a sealing unit (32) for gas-tight sealing, in particular for hydrogen gas-tight sealing.

14. A fuel cell system with a fuel cell comprising a cathode chamber and an anode chamber, an anode chamber supply line, a cathode chamber supply line and a liquid separator assigned to the anode chamber supply line and/or the cathode chamber supply line, wherein the liquid separator comprises a collecting vessel with a housing having an inlet (4) as well as a separation chamber (8, 10) and an outlet (26) for discharging separated liquid, **characterized in that**
the separation chamber is divided into at least two subchambers (8, 10) communicating with each other via an overflow (24, 24') and that the first subchamber (8) has assigned thereto a heating unit (28, 124) and the outlet (26).

15. The fuel cell system according to claim 14, **characterized in that** the anode chamber supply line and/or the cathode chamber supply line are configured as a ring line for guiding an operating fluid in a circuit.

16. The fuel cell system according to claim 14 or 15, **characterized in that** the collecting vessel has the anode chamber supply line assigned thereto.

17. The fuel cell system according to one of the preceding claims 14 to 16, **characterized in that** the collecting vessel is further developed according to at least one of the claims 2 to 13.

18. A method of operating a liquid separator of a fuel cell system, said liquid separator having a collecting vessel with a housing (2) comprising a separation chamber (8, 10), said method comprising the following method steps
a) collecting a predetermined volume of separated liquid in a subchamber (10) of the separation chamber (8, 10);
b) transferring the separated liquid to another subchamber (8) of the separation chamber (8, 10) when the predetermined volume of separated liquid has been collected, while the predetermined volume of the separated liquid remains constant in said first subchamber (10);
c) collecting the transferred liquid in said other subchamber (8);
d) discharging, at least partially, the collected, transferred liquid, when a boundary condition is satisfied;
wherein a solidification of the liquid transferred in method step c) is detected and the solidified, transferred liquid has applied thereto heat from a heating unit (28, 124).

19. The method according to claim 18, **characterized in that** the solidified liquid has heat applied thereto until a predetermined further boundary condition is satisfied.

20. The method according to one of the preceding claims 17 to 19, **characterized in that** method steps a) to c) are executed under gas-tight conditions.

## Revendications

1. Utilisation d'un récipient de collecte pour un séparateur de liquide d'un système de pile à combustible, le récipient de collecte possédant un carter (2) qui présente une entrée (4) ainsi qu'une chambre de séparation (8, 10) et un écoulement de sortie (26) destiné à évacuer du liquide ayant été séparé, la chambre de séparation étant divisée en au moins deux chambres partielles (8, 10), qui communiquent mutuellement par un élément de débordement (24, 24'), et un dispositif de chauffage (28, 124) et l'écoulement de sortie (26) étant associés à la première chambre partielle (8).

2. Utilisation d'un récipient de collecte selon la revendication 1, **caractérisée en ce que** la première chambre partielle (8) présente une capacité en volume inférieure à celle de la deuxième chambre partielle (10).

3. Utilisation d'un récipient de collecte selon l'une des revendications précédentes 1 ou 2, **caractérisée en ce qu'**à l'intérieur de la paroi séparatrice, qui est prévue entre la première chambre partielle (8) et la deuxième chambre partielle (10), est formée une conduite de préchauffage.

4. Utilisation d'un récipient de collecte selon l'une des revendications précédentes, **caractérisée en ce que** la première chambre partielle (8) est agencée à l'intérieur de la deuxième chambre partielle (10).

5. Utilisation d'un récipient de collecte selon l'une des revendications précédentes, **caractérisée en ce que** les deux chambres partielles (8, 10) sont agencées sensiblement de manière coaxiale l'une à l'autre.

6. Utilisation d'un récipient de collecte selon l'une des revendications précédentes, **caractérisée en ce que** la première chambre partielle (8) est délimitée par une paroi couplée par conduction de chaleur au dispositif de chauffage (28, 124).

7. Utilisation d'un récipient de collecte selon l'une des revendications précédentes, **caractérisée en ce qu'**une vanne (114) associée à l'écoulement de sortie (26) et le dispositif de chauffage (124) sont logés latéralement sur le même côté du carter (2), dans des cavités (116, 118) formées dans le carter (2).

8. Utilisation d'un récipient de collecte selon l'une des revendications précédentes, **caractérisée en ce qu'**à la deuxième chambre partielle (10) est associée une autre sortie d'écoulement (112), qui est agencée, dans le sens de la hauteur de la deuxième chambre partielle (10), entre l'élément de débordement (24') et une extrémité inférieure de la deuxième chambre partielle (10).

9. Utilisation d'un récipient de collecte selon l'une des revendications précédentes, **caractérisée par** un tronçon de couplage (12), qui est formé d'un seul tenant avec le carter (2), et comporte un tronçon de paroi (12) en saillie vers le haut, séparant les deux chambres partielles (8, 10) et formant l'élément de débordement (24).

10. Utilisation d'un récipient de collecte selon la revendication 9, **caractérisée en ce que** le tronçon de paroi (12b) en saillie vers le haut, est de configuration conique.

11. Utilisation d'un récipient de collecte selon l'une des revendications 9 ou 10, **caractérisée en ce que** la première chambre partielle (8) est délimitée par un élément de fond (18) s'appuyant de manière étanche contre le tronçon de couplage (12) et auquel est associé le dispositif de chauffage (28).

12. Utilisation d'un récipient de collecte selon l'une des revendications précédentes, **caractérisée en ce que** l'écoulement de sortie (26) comprend un moyen de retenue de substances solides (26a).

13. Utilisation d'un récipient de collecte selon l'une des revendications précédentes, **caractérisée en ce qu'**à l'entrée (4) est associé un moyen d'étanchéité (32) pour assurer une étanchéité au gaz, notamment une étanchéité au gaz d'hydrogène.

14. Système de pile à combustible comprenant une cellule électrochimique de pile à combustible, qui renferme une chambre de cathode et une chambre d'anode, une conduite d'alimentation de chambre d'anode, une conduite d'alimentation de chambre de cathode, et un dispositif de séparateur de liquide associé à la conduite d'alimentation de chambre d'anode et/ou à la conduite d'alimentation de chambre de cathode, le dispositif de séparateur de liquide possédant un récipient de collecte avec un carter, qui comporte une entrée (4) ainsi qu'une chambre de séparation (8, 10) et un écoulement de sortie (26) destiné à l'évacuation de liquide ayant été séparé, **caractérisé en ce que** la chambre de séparation est divisée en au moins deux chambres partielles (8, 10), qui communiquent mutuellement par un élément de débordement (24, 24'), et un dispositif de chauffage (28, 124) et l'écoulement de sortie (26) sont associés à la première chambre partielle (8).

15. Système de pile à combustible selon la revendication 14, **caractérisé en ce que** la conduite d'alimentation de chambre d'anode et/ou la conduite d'alimentation de chambre de cathode sont réalisées sous forme de conduite annulaire pour véhiculer en circuit un fluide de fonctionnement.

16. Système de pile à combustible selon la revendication 14 ou la revendication 15, **caractérisé en ce que** le récipient de collecte est associé à la conduite d'alimentation de chambre d'anode.

17. Système de pile à combustible selon l'une des revendications 14 à 16, **caractérisé en ce que** le récipient de collecte est par ailleurs configuré selon l'une au moins des revendications 2 à 13.

18. Procédé pour faire fonctionner un séparateur de liquide d'un système de pile à combustible, qui possède un récipient de collecte avec un carter (2) présentant une chambre de séparation (8, 10), le procédé comprenant les étapes suivantes :
a) collecte d'un volume prédéterminé de liquide ayant été séparé dans une chambre partielle (10) de la chambre de séparation (8, 10) ;
b) transfert du liquide ayant été séparé dans une autre chambre partielle (8) de la chambre de séparation (8, 10) après que le volume prédéterminé du liquide séparé ait été collecté, tandis que le volume prédéterminé du liquide ayant été séparé reste constant dans ladite une chambre partielle (8) ;
c) collecte du liquide ayant été transféré dans ladite autre chambre partielle (8) ;
d) évacuation au moins partielle du liquide transféré, collecté, lorsqu'une condition limite est remplie ;
procédé d'après lequel on relève une solidification du liquide transféré dans l'étape c), et le liquide transféré solidifié est sollicité avec de la chaleur d'un dispositif de chauffage (28, 124).

19. Procédé selon la revendication 18, **caractérisé en ce que** le liquide solidifié est sollicité avec de la chaleur jusqu'à ce qu'une autre condition limite prescrite soit remplie.

20. Procédé selon l'une des revendications précédentes 17 à 19, **caractérisé en ce que** les étapes de procédé a) à c) sont effectuées dans des conditions d'étanchéité aux gaz.
